# EUROPEAN PATENT SPECIFICATION

(11) **EP 2 184 671 B1**
(45) Date of publication and mention of the grant of the patent: **04.05.2011**
(21) Application number: 08253514.7
(22) Date of filing: 29.10.2008
(51) Int. Cl.: G06F 3/048

(54) **Method and apparatus for switching touch screen of handheld electronic apparatus**
Verfahren und Vorrichtung zum Umschalten eines Touchscreens einer tragbaren elektronischen Vorrichtung
Procédé et appareil pour commuter l'écran tactile d'un appareil électronique portable

(43) Date of publication of application: 12.05.2010
(73) Proprietor: Giga-Byte Communications, Inc., Hsin-Tien Taipei Hsien (TW); Giga-Byte Technology Co., Ltd., Xindian City Taipei County 231 (TW)
(72) Inventor: Huang, Cheng-Wen, Hsin-Tien Taipei Hsien (TW); Chen, Chun-Chi, Hsin-Tien Taipei Hsien (TW)
(74) Representative: Cheyne, John Robert Alexander M.

(56) References cited:
- EP-A- 1 058 181
- EP-A- 1 241 581
- WO-A-96/30890
- WO-A-2006/020305
- WO-A-2007/149357
- US-A- 5 463 725
- US-A- 5 594 471
- US-A- 5 910 802
- US-A1- 2003 179 189
- US-A1- 2006 109 259
- US-A1- 2007 262 951

## Description

### BACKGROUND OF THE INVENTION

### Field of the Invention

The present invention relates to a touch screen, and more particularly to a method and an apparatus for switching a touch screen of a handheld electronic apparatus.

### Description of Prior Art

An input operation interface is a necessary hardware device for a handheld electronic apparatus. There are numbers, characters, phonetic symbols, roots of input methods, and various functional patterns are mark on the input operation interface. Hence, users can input data or operate many functions of the electronic apparatus by using the input operation interface.

In the past, most of the input operation interfaces of the handheld electronic apparatus are implemented by touch-button structure. At present, however, in order to enlarge surface area of liquid crystal display, a number of keys are replaced by a touch panel installed on the liquid crystal display. Hence, both the touch-button interface and touch-panel interface are used.

US2007262951 teaches a proximity sensor device which is provided with a rectangular central sensing region encompassed by an outer sensing region. Selection of an adjustment (type of input) is performed by a special drag gesture from the outer sensing region into the inner sensing region, whereas the selected adjustment (e.g. scrolling up, scrolling down, panning right, or panning left) is based on the initial direction of entry from the outer region into the central region. The disclosed embodiments refer to touch pads, however D1 notes that the proximity sensor device may also include touch screens.

US5910802 discloses a handheld computing device with a touch-sensitive display. The display includes a touch-sensitive area superimposed on a viewing area, whereby the touch-sensitive area extends beyond the viewing area to form a border outside of the viewing area but within the touch-sensitive area. The operating system is configured to present a taskbar within the viewing area in response to contact from a stylus in the border beneath the viewing area.

US2006109259 discloses a touch-sensitive game screen having a scroll starting area (second display area) surrounding a working area (first display area). When an initial touch input is performed on the scroll starting area, the input mode is shifted from a default mode for inputting text to a mode for changing an image displayed on the working area. As visual cue a predetermined image (e.g. black image) is fixedly displayed on in the scroll starting area.

EP1241581 teaches a document display device having a shape which is substantially similar to the shape of a printed document. A browsing sensor having a touch-sensitive surface which extends at least partially over a lateral face or over the display screen of the display device provides for a natural page turning experience. A page turn action is performed upon receiving a browsing signal following to a finger movement along a direction in one of said touch-sensitive zones.

US5594471 discloses a computer workstation having a display screen and a touch screen. The touch screen has a display touch zone that overlaps the display and a border touch zone located outside of the display. The border touch zone can be divided into rows and columns which can then be used to create touch buttons associated with keyboard operations from a general purpose computer. To assist the user in using these buttons, a template overlay will show legends or graphics for each button.

However, user usually needs to operate a number of keys or touch the touch panel several times to switch a few pages on the screen. That is inconvenient to operate an action requiring some steps, and particularly for the user driving a car.

### SUMMARY OF THE INVENTION

Accordingly, a primary object of the present invention is to provide a touch panel that is installed on a liquid crystal display, and a surface area of the touch panel is larger than one of the liquid crystal display. A primary touch area is defined as an overlapped portion of the touch panel and the liquid crystal display, and a secondary touch area is defined as a non-overlapping portion of the touch panel and the liquid crystal display. Moreover, a page switching action is determined whether a touch-drag action is operated by sliding a finger from the primary touch area to the secondary touch area or the touch-drag action is operated by sliding the finger from the secondary touch area to the primary touch area. Hence, the page switching action can be operated quickly by users.

In order to achieve the objective mentioned above, the present invention provides an apparatus for switching a touch screen of a handheld electronic apparatus. The switch apparatus comprises a liquid crystal display and a touch panel. A surface area of the touch panel is larger than one of the liquid crystal display. A primary touch area is defined as an overlapped portion of the touch panel and the liquid crystal display, and a secondary touch area is defined as a non-overlapped portion of the touch panel and the liquid crystal display.

In order to achieve the objective mentioned above, the present invention provides a method for switching a touch screen of a handheld electronic apparatus. The switch method comprises: firstly, the method determines whether a touch-drag action is initially operated by sliding the finger from the primary touch area or the secondary touch area when the touch panel is touched. Afterward, the method executes a page switching action when the touch-drag action is initially operated by sliding the finger from the primary touch area and the touch-drag action is operated by sliding the finger from the primary touch area to the secondary touch area. Finally, the method switches the page to go back to the previous page when the touch-drag action is operated by sliding the finger from the secondary touch area to go back to the primary touch area. Hence, the page switching action can be operated quickly by users.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The invention is defined by the appended claims. The invention itself, however, may be best understood by reference to the following detailed description of the invention, which describes an exemplary embodiment of the invention, taken in conjunction with the accompanying drawings, in which:
Fig. 1A is a schematic view of a handheld electronic apparatus according to the present invention;
Fig. 1B and Fig. 1C are schematic views of switching pages of the handheld electronic apparatus;
Fig. 2 is a flowchart of operating a touch panel of the handheld electronic apparatus;
Fig. 3 is a schematic view of executing a touch-drag action by a user's finger on the touch panel;
Fig. 4 is another schematic view of executing a touch-drag action by a user's finger on the touch panel;
Fig. 5 is a schematic view of a coordinate setting of the touch panel;
Fig. 6 is a schematic view of distinct operated coordinate points; and
Fig. 7 is a schematic view of dragging the finger from a start coordinate point to an end coordinate point.

### DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Reference will now be made to the drawing figures to describe the present invention in detail.

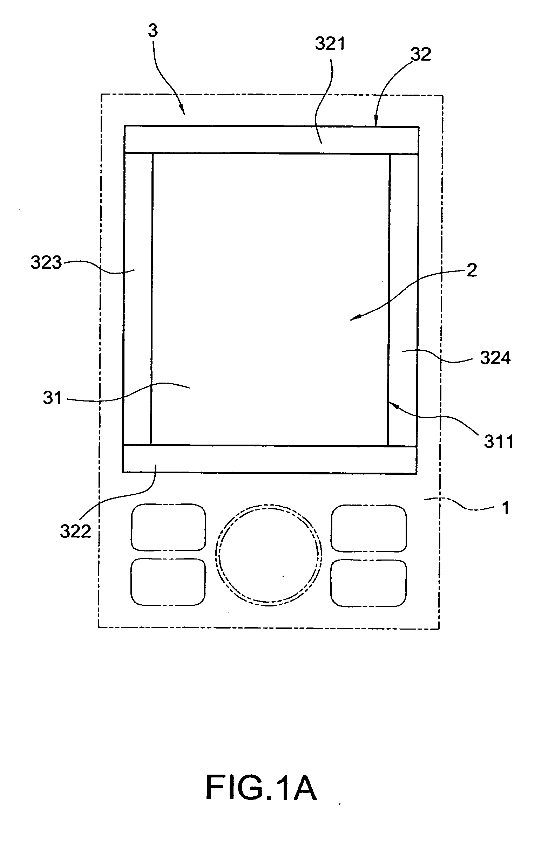

Reference is made to Fig. 1A which is a schematic view of a handheld electronic apparatus according to the present invention. The handheld electronic apparatus 1 has a liquid crystal display 2 and a touch panel 3. A surface area of the touch panel 3 is larger than that of the liquid crystal display 2. A primary touch area 31 is defined as an overlapped portion of the touch panel 3 and the liquid crystal display 2, and a secondary touch area 32 is defined as a non-overlapped portion of the touch panel 3 and the liquid crystal display 2. The primary touch area 31 is separated from the secondary touch area 32 by a sideline and the sideline is set as a boundary line 311 between the primary touch area 31 and the secondary touch area 32. The secondary touch area 32 has a first touch area 321, a second touch area 322, a third touch area 323, and a fourth touch area 324, and the four touch areas (321, 322, 323, and 324) are surrounded the primary touch area, respectively. The first touch area 321, the second touch area 322, the third touch area 323, and the fourth touch area 324 are set on upper side, lower side, left side, and right side of the secondary touch area 32, respectively. A page switching action is executed when a touch-drag action is operated by sliding a finger from the secondary touch area 32, (any one of the four touch areas) to the primary touch area 31 or from the primary touch area 31 to the secondary touch area 32. Hence, the page switching action can be operated quickly by users.

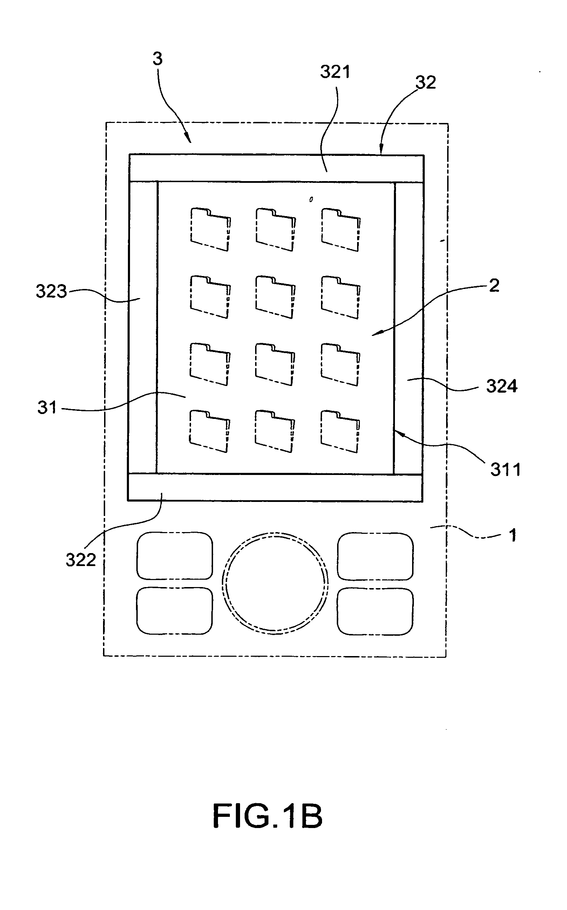

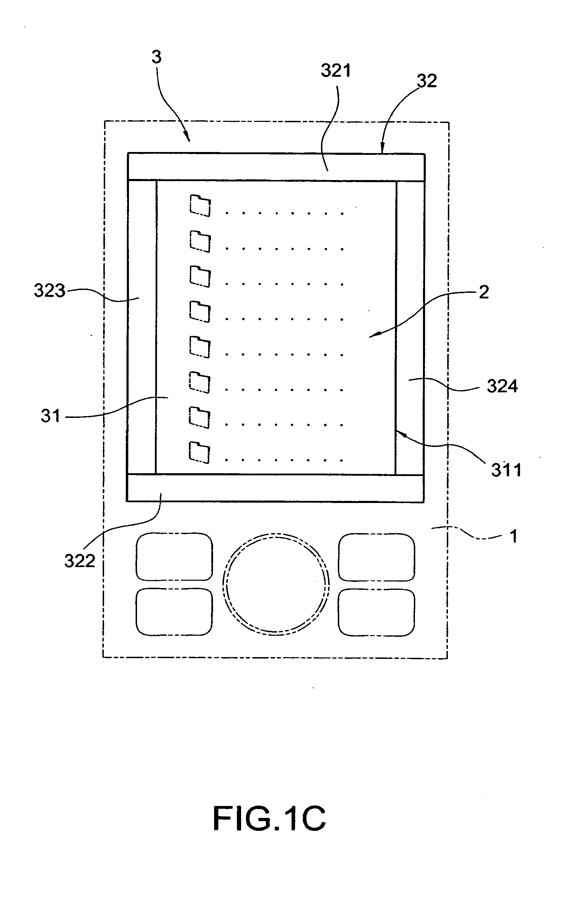

References are made from Fig. 1B and Fig. 1C which are schematic views of switching pages of the handheld electronic apparatus. For example, a page A is displayed on the liquid crystal display 2 (shown in Fig. 1B). The page A will be switched to a page B (shown in Fig. 1C) when the touch-drag action is operated by sliding the finger from the primary touch area 31 to the second touch area 322 of the secondary touch area 32. On the contrary, the page B will be switched to go back to the page A when the touch-drag action is operated by sliding the finger from the second touch area 322 to go back to the primary touch area 31. In the preferred embodiment, the pages can be directories of different layers, web-pages or graphic files.

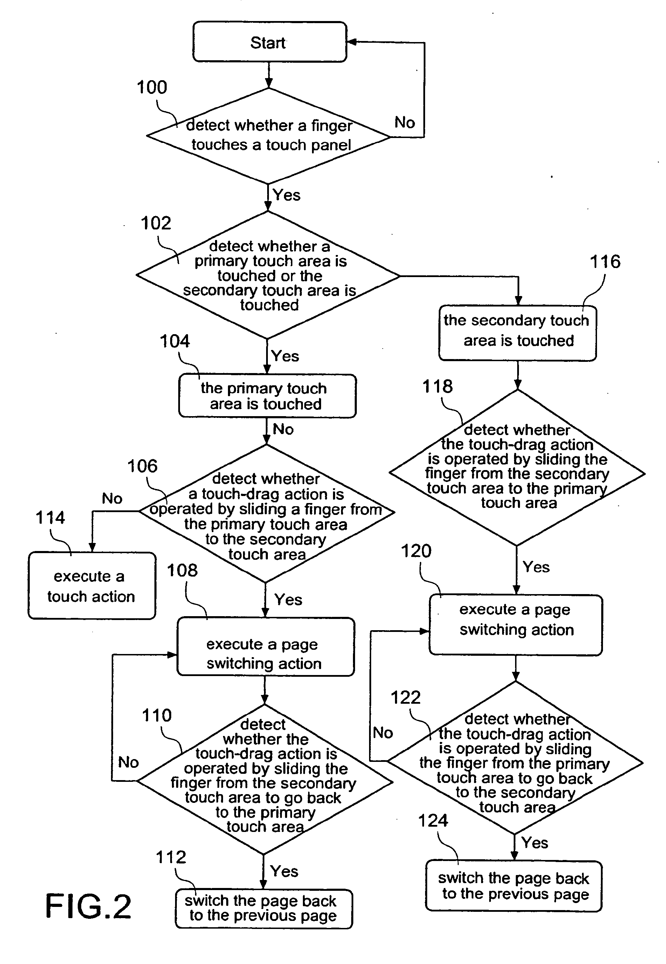

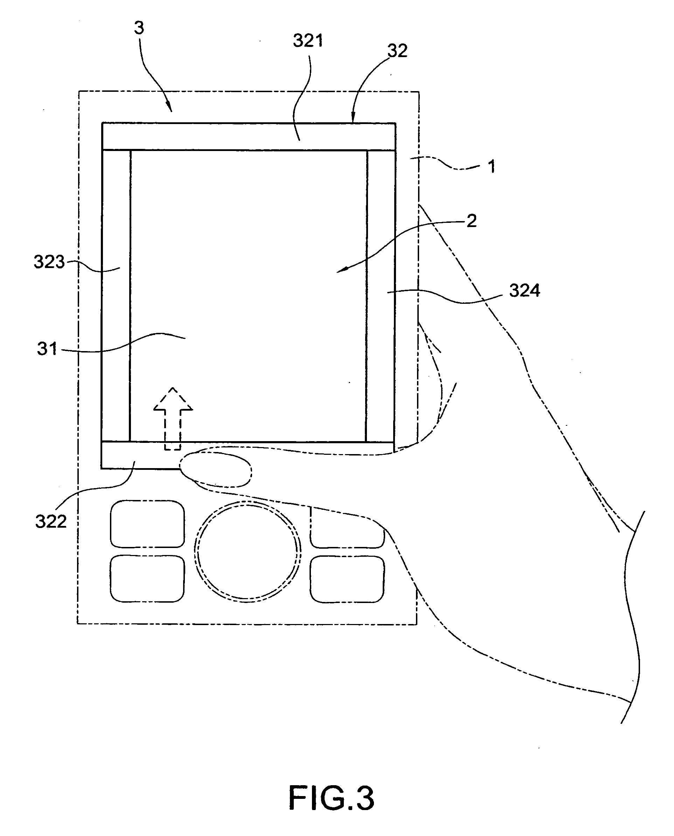

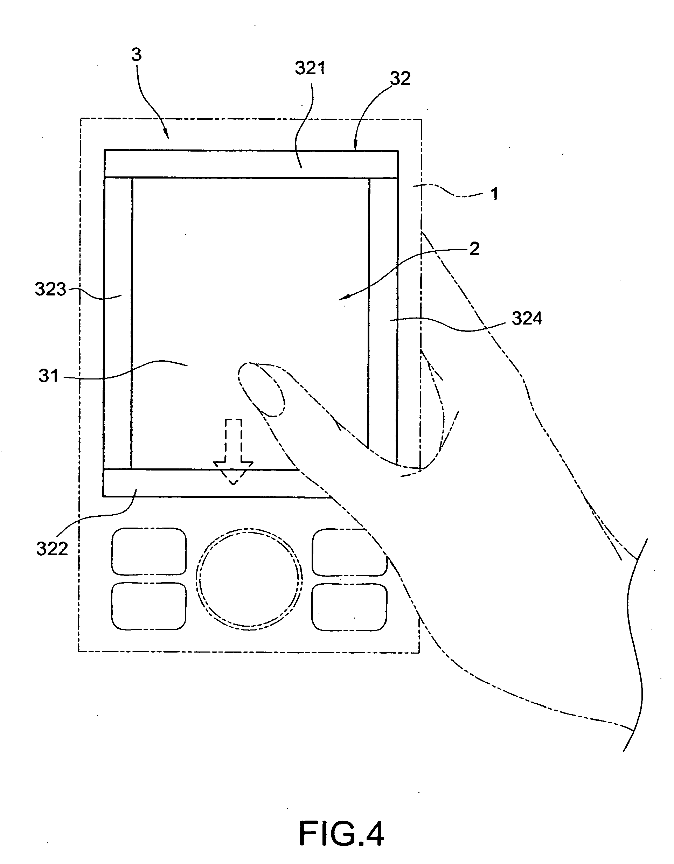

References are made from Fig. 2 to Fig. 4 which are a flowchart of operating a touch panel of the handheld electronic apparatus, a schematic view of executing a touch-drag action by a user's finger on the touch panel, and another schematic view of executing a touch-drag action by a user's finger on the touch panel, respectively. Firstly, the method detects whether a finger 4 touches the touch panel 3 (100) when the user operates the handheld electronic apparatus. Afterward, the method detects whether the primary touch area 31 is touched or the secondary touch area 32 (any one of the four touch areas) is touched (102) when the finger 4 touches the touch panel 3. After the step 102, the primary touch area 31 is touched (104). Afterward, the method detects whether a touch-drag action is operated by sliding a finger from the primary touch area 31 to the secondary touch area 32 (106). Afterward, a page switching action is executed (108) when the touch-drag action is operated by sliding the finger from the primary touch area 31 to the secondary touch area 32. Afterward, the method detects whether the touch-drag action is operated by sliding the finger from the secondary touch area 32 to go back to the primary touch area 31 (110). The step 108 is re-executed when the touch-drag action is not operated by sliding the finger from the secondary touch area 32 to go back to the primary touch area 31. If not so, the page is switched back to the previous page (112) when the touch-drag action is operated by sliding the finger from the secondary touch area 32 to go back to the primary touch area 31. In addition, a touch action is executed (114) when the touch-drag action is not operated by sliding the finger from the primary touch area 31 to the secondary touch area 32.

In addition, the secondary touch area 32 is touched (116) after the step 102. Afterward, the method detects whether the touch-drag action is operated by sliding the finger from the secondary touch area 32 to the primary touch area 31 (118). Afterward, a page switching action is executed (120) when the touch-drag action is operated by sliding the finger from the secondary touch area 32 to the primary touch area 31. Afterward, the method detects whether the touch-drag action is operated by sliding the finger from the primary touch area 31 to go back to the secondary touch area 32 (122). The step 120 is re-executed when the touch-drag action is not operated by sliding the finger from the primary touch area 31 to go back to the secondary touch area 32. If not so, the page is switched back to the previous page (124) when the touch-drag action is operated by sliding the finger from the primary touch area 31 to go back to the secondary touch area 32.

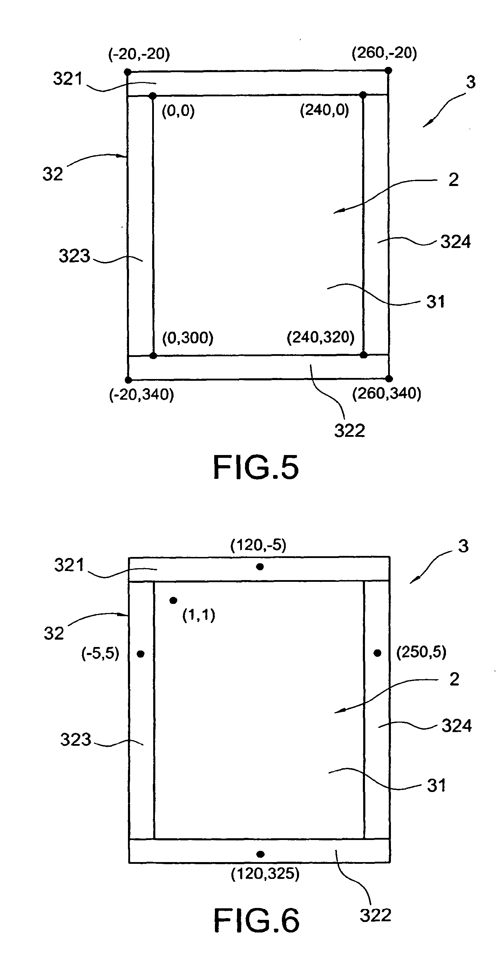

Reference is made to Fig. 5 which is a schematic view of a coordinate setting of the touch panel. In this example, a liquid crystal display 2 with 240*320 pixels and a touch panel 3 with 280*360 pixels are exemplified to further demonstrate the present invention. The touch panel 3 is installed on the liquid crystal display 2. A primary touch area 31 is defined as an overlapped portion of the touch panel 3 and the liquid crystal display 2, and a secondary touch area 32 is defined as a non-overlapped portion of the touch panel and the liquid crystal display. A first touch area 321, a second touch area 322, a third touch area 323, and a fourth touch area 324 are set on upper side, lower side, left side, and right side of the secondary touch area 32, respectively, and each of the four touch areas (321, 322, 323, and 324) has a 20-pixel width. Furthermore, four corner coordinates of the secondary touch area 32 are set as (-20, -20), (260, -20), (-20, 340), and (260, 340), respectively, and four corner coordinates of the primary touch area 31 are set as (0, 0), (240, 0), (0, 320), and (240, 320), respectively.

Reference is made to Fig. 6 which is a schematic view of distinct operated coordinate points. A touch point 30 is generated when a user's finger touches on the touch panel 3, and the touch point 30 is represented in a coordinate point (X, Y).

The touch point 30 is detected to be on the primary touch area 31 when (0 ≦ X ≦ 240 and 0 ≦ Y ≦ 320). For example, (X, Y) = (1, 1) is detected to be on the primary touch area 31, because of 0 ≦ (X=1) ≦ 240 and 0 ≦ (Y=1) ≦ 320.

The touch point 30 is detected to be on the third touch area 323 of the secondary touch area 32 when (X < 0 and 0 ≦ Y ≦ 320). For example, (X, Y) = (-5, 5) is detected to be on the third touch area 323, because of 0 > (X=-5) and 0 ≦ (Y=5) ≦ 320.

The touch point 30 is detected to be on the fourth touch area 324 of the secondary touch area 32 when (X> 240 and 0 ≦ Y ≦ 320). For example, (X, Y) = (250, 5) is detected to be on the fourth touch area 324, because of (X=250)> 240 and 0 ≦ (Y=5) ≦ 320.

The touch point 30 is detected to be on the first touch area 321 of the secondary touch area 32 when (Y< 0). For example, (X, Y) = (120, -5) is detected to be on the first touch area 321, because of (Y=-5)< 0.

The touch point 30 is detected to be on the second touch area 322 of the secondary touch area 32 when (Y> 320). For example, (X, Y) = (120, 325) is detected to be on the second touch area 322, because of (Y=325)> 320.

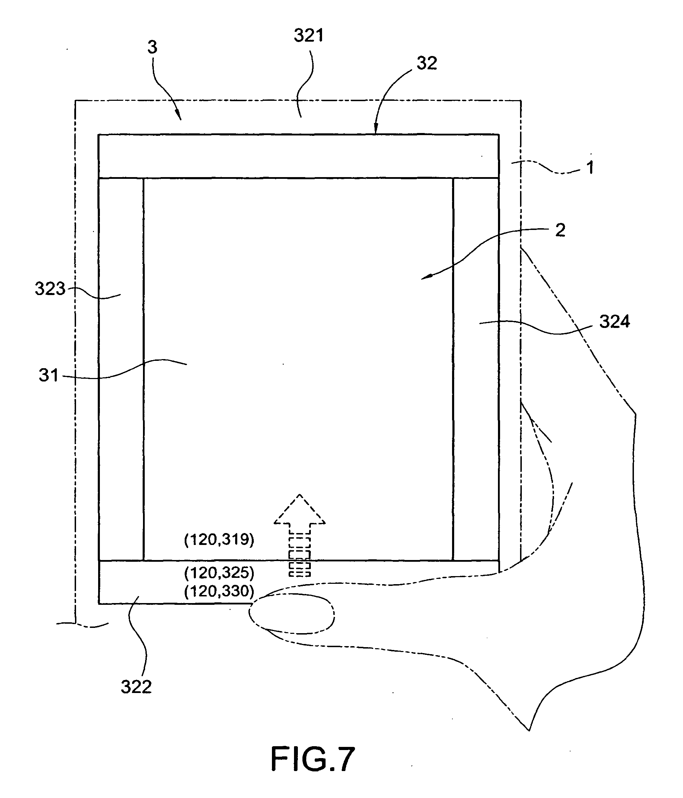

Reference is made to Fig. 7 which is a schematic view of dragging the finger from a start coordinate point to an end coordinate point. For example, the start coordinate point is detected initially on the second touch area 322 of the secondary touch area 32 when the user's finger 4 touches first on a coordinate point (X, Y) = (120, 330). Moreover, the start coordinate point (X, Y) = (120, 330) is also recorded. A coordinate point (X, Y) = (120, 325) of the touch point 30 is detected and returned when the finger 4 moves upwardly and touches on the coordinate point (X, Y) = (120, 325). Any page switching action is not executed because the coordinate point (X, Y) = (120, 325) is still detected on the second touch area 322.

The coordinate point (X, Y) = (120, 319) of the touch point 30 is detected and returned when the finger 4 continuously moves upwardly and touches on the coordinate point (X, Y) = (120, 319). An end coordinate point (X, Y) = (120, 319) is recorded when the finger 4 stops moving and then leaves the touch panel 3. Afterward, a touch-drag action is detected from the secondary touch area 32 to the primary touch area 31 according to the start coordinate point (X, Y) = (120, 330) and the end coordinate point (X, Y) = (120, 319). Hence, a page switching action is executed.

## Claims

1. A method for switching a touch screen of a handheld electronic device (1), and the handheld electronic device (1) has a liquid crystal display (2) adapted to display a page of information and a touch panel (3); a surface area of the touch panel (3) is larger than one of the liquid crystal display (2); a rectangular primary touch area (31) is defined as an overlapped portion of the touch panel (3) and the liquid crystal display (2), and a secondary touch area (32) is defined as a non-overlapped portion of the touch panel (3) and the liquid crystal display (2), the switch method comprising:
(a) determining whether a touch-drag action is initially operated from the primary touch area (31) or the secondary touch area (32) when the touch panel (3) is touched;
(b) executing a page switching action when the touch-drag action is initially operated by sliding a finger (4) from the primary touch area (31) and then the touch-drag action is operated by sliding the finger (4) further from the primary touch area (31) to the secondary touch area (32); and
(c) executing a page switching action when the touch-drag action is initially operated by sliding the finger (4) from the secondary touch area (32) and then the touch-drag action is operated by sliding the finger (4) further from the secondary touch area (32) to the primary touch area (31).

2. The switch method in claim 1, further comprising:
switching the page to go back to the previous page when the touch-drag action is operated by sliding the finger (4) from the secondary touch area (32) to go back to the primary touch area (31) after step (b).

3. The switch method in claim 1, further comprising:
switching the page to go back to the previous page when the touch-drag action is operated by sliding the finger (4) from the primary touch area (31) to go back to the secondary touch area (32) after the step (c).

4. The switch method in claim 1, further comprising:
executing a touch action when the primary touch area (31) is initially touched, and the touch-drag action is not operated by sliding the finger (4) from the primary touch area (31) to the secondary touch area (32).

5. The switch method in claim 1, wherein the secondary touch area (32) has a first touch area (321), a second touch area (322), a third touch area (323), and a fourth touch area (324).

6. The switch method in claim 5, wherein the first touch area (321), the second touch area (322), the third touch area (323), and the fourth touch area (324) are surrounding the primary touch area (31), respectively.

7. The switch method in claim 6, wherein the primary touch area (31), the first touch area (321), the second touch area (322), the third touch area (323), and the fourth touch area (324), are defined by predetermined boundary coordinate points, respectively.

8. The switch method in claim 7, wherein the touch-drag action is such defined that a touch is performed on the touch panel (3) and dragged continuously from a start coordinate point to an end coordinate point of the touch panel (3).

9. The switch method in claim 7, wherein the touch-drag action is judged according to a start coordinate point and an end coordinate point with respect to the boundary coordinate points.

10. An apparatus for switching a touch screen of a handheld electronic device (1), the apparatus comprising:
a liquid crystal display (2); and
a touch panel (3), a surface area of the touch panel (3) is larger than that of the liquid crystal display (2); a primary touch area (31) is defined as an overlapped portion of the touch panel (3) and the liquid crystal display (2), and a secondary touch area (32) is defined as a non-overlapped portion of the touch panel (3) and the liquid crystal display (2);
wherein a page switching action is determined by judging whether a touch-drag action is operated by sliding the finger (4) from the primary touch area (31) to the secondary touch area (32) or the touch-drag action is operated by sliding the finger (4) from the secondary touch area (32) to the primary touch area (31).

## Patentansprüche

1. Verfahren zum Schalten eines Touch-Screens einer tragbaren elektronischen Vorrichtung (1), und die tragbare elektronische Vorrichtung (1) hat eine Flüssigkristallanzeige (2), welche eingerichtet ist, eine Seite an Information anzuzeigen, und ein Touch-Panel (3);
wobei ein Oberflächenbereich des Touch-Panels (3) größer als einer der Flüssigkristallanzeige (2) ist;
wobei ein rechteckiger Primär-Berühr-Bereich (31) als ein überlappender Teil des Touch-Panels (3) und der Flüssigkristallanzeige (2) definiert ist, und ein Sekundär-Berühr-Bereich (32) als ein nicht überlappender Teil des Touch-Panels (3) und der Flüssigkristallanzeige (2) definiert ist, wobei das Schaltverfahren umfasst:
(a) Bestimmen, ob eine Berühr-Ziehaktion zunächst von dem Primär-Berühr-Bereich (31) oder dem Sekundär-Berühr-Bereich (32) betrieben wird, wenn das Touch-Panel (3) berührt wird;
(b) Ausführen einer Seitenwechselaktion, wenn die Berühr-Ziehaktion zunächst durch das Gleiten eines Fingers (4) von dem Primär-Berühr-Bereich (31) betrieben wird und dann die Berühr-Ziehaktion durch Gleiten des Fingers (4) weiter von dem Primär-Berühr-Bereich (31) zu dem Sekundär-Berühr-Bereich (32) betrieben wird; und
(c) Ausführen einer Seitenwechselaktion, wenn die Berühr-Ziehaktion zunächst durch das Gleiten eines Fingers (4) von dem Sekundär-Berühr-Bereich (32) betrieben wird und dann die Berühr-Ziehaktion durch Gleiten des Fingers (4) weiter von dem Sekundär-Berühr-Bereich (32) zu dem Primär-Berühr-Bereich (31) betrieben wird.

2. Schaltverfahren nach Anspruch 1, welches ferner umfasst:
Wechseln der Seite, um zurück zu der vorherigen Seite zu gehen, wenn eine Berühr-Ziehaktion durch Gleiten des Fingers (4) von dem Sekundär-Berühr-Bereich (32) betrieben wird, um zurück zu dem Primär-Berühr-Bereich (31) zu gehen, nach Schritt (b).

3. Schaltverfahren nach Anspruch 1, welches ferner umfasst:
Wechseln der Seite, um zurück zu der vorherigen Seite zu gehen, wenn die Berühr-Ziehaktion durch Gleiten des Fingers (4) von dem Primär-Berühr-Bereich (31) betrieben wird, um zurück zu dem Sekundär-Berühr-Bereich (32) zu gehen nach dem Schritt (c).

4. Schaltverfahren nach Anspruch 1, welches ferner umfasst:
Ausführen einer Berühraktion, wenn der Primär-Berühr-Bereich (31) zunächst berührt wird, und die Berühr-ZiehAktion nicht durch Gleiten des Fingers (4) von dem Primär-Berühr-Bereich (31) zu dem Sekundär-Berühr-Bereich (32) betrieben wird.

5. Schaltverfahren nach Anspruch 1, wobei der Sekundär-Berühr-Bereich (32) einen erste Berühr-Bereich (321), einen zweiten Berühr-Bereich (322), einen dritten Berühr-Bereich (323) und einen vierten Berühr-Bereich (324) aufweist.

6. Wechselverfahren nach Anspruch 5, wobei der erste Berühr-Bereich (321), der zweite Berühr-Bereich (322), der dritte Berühr-Bereich (323) und der vierte Berühr-Bereich (324) den Primär-Berühr-Bereich (31) jeweils umgeben.

7. Schaltverfahren nach Anspruch 6, wobei der Primär-Berühr-Bereich (31), der erste Berühr-Bereich (321), der zweite Berühr-Bereich (322), der dritte Berühr-Bereich (323), und der vierte Berühr-Bereich (324) durch vorbestimmte Grenzkoordinatenpunkte jeweils definiert sind.

8. Schaltverfahren nach Anspruch 7, wobei die Berühr-Ziehaktion so definiert ist, dass eine Berührung auf dem Touch-Panel (3) durchgeführt wird und kontinuierlich von einem Start-Koordinatenpunkt zu einem End-Koordinatenpunkt auf dem Touch-Panel (3) gezogen wird.

9. Schaltverfahren nach Anspruch 7, wobei die Berühr-Ziehaktion gemäß einem Start-Koordinatenpunkt und einem End-Koordinatenpunkt hinsichtlich der Grenzkoordinatenpunkte beurteilt wird.

10. Gerät zum Schalten eines Touch-Screens einer tragbaren elektronischen Vorrichtung (1), wobei das Gerät umfasst:
eine Flüssigkristallanzeige (2), welche eingerichtet ist, eine Seite von Information anzuzeigen; und
ein Touch-Panel (3), wobei ein Oberflächenbereich des Touch-Panels (3) größer als das der Flüssigkristallanzeige (2) ist; ein Primär-Berühr-Bereich (31) als ein überlappender Teil des Touch-Panels (3) und der Flüssigkristallanzeige (2) definiert ist, und ein Sekundär-Berühr-Bereich (32) als ein nichtüberlappender Teil des Touch-Panels (3) und der Flüssigkristallanzeige (2) definiert ist;
wobei eine Seitenwechselaktion bestimmt wird durch Beurteilen, ob eine Berühr-Ziehaktion durch Gleiten des Fingers (4) von dem Primär-Berühr-Bereich (31) zu dem Sekundär-Berühr-Bereich (32) betrieben wird, oder ob die Berühr-Ziehaktion durch Gleiten des Fingers (4) von dem Sekundär-Berühr-Bereich (32) zu dem Primär-Berühr-Bereich (31) betrieben wird.

## Revendications

1. Procédé de commutation d'un écran tactile d'un dispositif électronique (1) tenu à la main, et dans lequel le dispositif électronique (1) tenu à la main possède un afficheur (2) à cristaux liquides apte à afficher une page d'information et un panneau tactile (3) ; dans lequel la superficie du panneau tactile (3) est plus grande que celle de l'afficheur (2) à cristaux liquides ; dans lequel une zone tactile principale rectangulaire (31) est définie comme une partie en chevauchement du panneau tactile (3) et de l'afficheur (2) à cristaux liquides, et dans lequel une zone tactile secondaire (32) est définie comme une partie non en chevauchement du panneau tactile (3) et de l'afficheur (2) à cristaux liquides, le procédé de commutation comprenant :
(a) la détermination de ce qu'une action de toucher-déplacer a été initialement effectuée à partir de la zone tactile principale (31) ou de la zone tactile secondaire (32) lorsque l'on touche le panneau tactile (3) ;
(b) l'exécution d'une action de changement de page lorsque l'action de toucher-déplacer est effectuée initialement en faisant glisser un doigt (4) à partir de la zone tactile principale (31) et qu'ensuite l'action de toucher-déplacer est effectuée en faisant glisser le doigt (4) davantage à partir de la zone tactile principale (31) jusqu'à la zone tactile secondaire (32) ; et
(c) l'exécution d'une action de changement de page lorsque l'action de toucher-déplacer est effectuée initialement en faisant glisser le doigt (4) à partir de la zone tactile secondaire (32) et qu'ensuite l'action de toucher-déplacer est effectuée en faisant glisser le doigt (4) davantage à partir de la zone tactile secondaire (32) jusqu'à la zone tactile principale (31).

2. Procédé de commutation selon la revendication 1, comprenant en outre le changement de la page pour revenir à la page antérieure lorsque l'action de toucher-déplacer est effectuée en faisant glisser le doigt (4) depuis la zone tactile secondaire (32) pour revenir à la zone tactile principale (31) après l'étape (b).

3. Procédé de commutation selon la revendication 1, comprenant en outre le changement de la page pour revenir à la page antérieure lorsque l'action de toucher-déplacer est effectuée en faisant glisser le doigt (4) depuis la zone tactile principale (31) pour revenir à la zone tactile secondaire (32) après l'étape (c).

4. Procédé de commutation selon la revendication 1, comprenant en outre l'exécution d'une action de toucher lorsque la zone tactile principale (31) a été touchée initialement, et qu'une action de toucher-déplacer n'a pas été effectuée en faisant glisser le doigt (4) à partir de la zone tactile principale (31) jusqu'à la zone tactile secondaire (32).

5. Procédé de commutation selon la revendication 1, dans lequel la zone tactile secondaire (32) comporte une première zone tactile (321), une deuxième zone tactile (322), une troisième zone tactile (323) et une quatrième zone tactile (324).

6. Procédé de commutation selon la revendication 5, dans lequel la première zone tactile (321), la deuxième zone tactile (322), la troisième zone tactile (323) et la quatrième zone tactile (324) entourent respectivement la zone tactile principale (31).

7. Procédé de commutation selon la revendication 6, dans lequel la zone tactile principale (31), la première zone tactile (321), la deuxième zone tactile (322), la troisième zone tactile (323) et la quatrième zone tactile (324) sont définies, respectivement, par des points prédéterminés de coordonnées de frontière.

8. Procédé de commutation selon la revendication 7, dans lequel l'action de toucher-déplacer est définie de façon qu'un touché est effectué sur le panneau tactile (3) et est déplacé de façon continue depuis un point de coordonnées de départ jusqu'à un point de coordonnées d'arrivée du panneau tactile (3).

9. Procédé de commutation selon la revendication 7, dans lequel l'action de toucher-déplacer est jugée d'après un point de coordonnées de départ et un point de coordonnées d'arrivée par rapport aux points de coordonnées de frontière.

10. Dispositif destiné à commuter un écran tactile d'un dispositif électronique (1) tenu à la main, le dispositif comprenant :
un afficheur (2) à cristaux liquides apte à afficher une page d'information ; et
un panneau tactile (3), dans lequel la superficie du panneau tactile (3) est plus grande que celle de l'afficheur (2) à cristaux liquides ; dans lequel une zone tactile principale (31) est définie comme une partie en chevauchement du panneau tactile (3) et de l'afficheur (2) à cristaux liquides, et une zone tactile secondaire (32) est définie comme une partie non en chevauchement du panneau tactile (3) et de l'afficheur (2) à cristaux liquides ;
dans lequel une action de changement de page est déterminée en jugeant si une action de toucher-déplacer est effectuée en faisant glisser le doigt (4) à partir de la zone tactile principale (31) jusqu'à la zone tactile secondaire (32) ou si l'action de toucher-déplacer est effectuée en faisant glisser le doigt (4) à partir de la zone tactile secondaire (32) jusqu'à la zone tactile principale (31).
